# NEUE EUROPÄISCHE PATENTSCHRIFT

(11) **EP 2 630 386 B2**
(45) Veröffentlichungstag und Bekanntmachung des Hinweises auf die Entscheidung über den Einspruch: **04.12.2019**
(45) Hinweis auf die Patenterteilung: 27.07.2016
(21) Anmeldenummer: 11770054.2
(22) Anmeldetag: 10.10.2011
(51) Int. Cl.: F16D 66/02

(54) **BREMSBELAGVERSCHLEISSANZEIGE, SCHEIBENBREMSE MIT EINER SOLCHEN ANZEIGE UND BREMSBACKEN FÜR EINE SOLCHE SCHEIBENBREMSE**
BRAKE LINING WEAR INDICATOR, DISC BRAKE HAVING SUCH AN INDICATOR AND BRAKE SHOES FOR SUCH A DISC BRAKE
INDICATEUR D'USURE DE GARNITURE DE FREIN, FREIN À DISQUE MUNI D'UN TEL INDICATEUR ET SEGMENTS DE FREIN POUR DE TELS FREINS À DISQUE

(30) Priorität: 20.10.2010 DE 102010048988
(43) Veröffentlichungstag der Anmeldung: 28.08.2013
(73) Patentinhaber: Wabco Radbremsen GmbH, 68229 Mannheim (DE)
(72) Erfinder: STUMPF, Martin, 68623 Lampertheim (DE); FALTER, Wolfgang, 69118 Heidelberg (DE)
(74) Vertreter: Leinweber & Zimmermann
(86) Internationale Anmeldenummer: PCT/EP2011/005059
(87) Internationale Veröffentlichungsnummer: WO 2012/052121

(56) Entgegenhaltungen:
- EP-A1- 0 464 347
- EP-A1- 0 692 652
- EP-A1- 0 698 796
- EP-A1- 2 175 158
- EP-A1- 2 182 236
- EP-A1- 2 339 199
- EP-A2- 0 465 954
- EP-A2- 0 937 906
- EP-A2- 1 148 267
- DE-A1- 2 337 234
- DE-A1- 2 450 761
- DE-A1- 2 505 733
- DE-A1- 3 820 977
- DE-A1- 4 239 179
- DE-A1- 4 239 179
- DE-A1- 10 301 734
- DE-A1- 10 337 124
- DE-C1- 4 301 129
- DE-C1- 4 301 129
- DE-C1- 10 126 908
- DE-C2- 2 505 733
- DE-C2- 4 120 527
- DE-U1- 8 909 084
- DE-U1- 9 010 354
- DE-U1- 9 010 354
- DE-U1- 20 014 875
- DE-U1-202008 013 226
- DE-U1-202008 013 226
- FR-A1- 2 935 768
- GB-A- 1 267 518
- GB-A- 1 344 062
- US-A- 4 298 857
- US-A- 5 168 260

## Beschreibung

Die Erfindung betrifft eine Scheibenbremse mit einem Bremsbacken und einer Vorrichtung zum Anzeigen des Verschleißes des Reibbelages eines Bremsbackens einer Scheibenbremse, mit einer elektrisch leitenden Einrichtung, die bei Erreichen einer ersten vorgegebenen Verschleißgrenze beim Bremsen mit der Bremsscheibe elektrisch in Kontakt kommt.

Es sind Scheibenbremsen bekannt, die einen Bremsbacken mit einer Trägerplatte und einem Reibbelag aufweisen. Beim Bremsen wird der Bremsbacken gegen die Bremsscheibe gedrückt. Dadurch verschleißt der Reibbelag mit der Zeit.

Zur Überwachung der Reibbelagstärke, insbesondere zur Feststellung des Unterschreitens einer zulässigen Verschleißgrenze des Reibbelages, ist es bekannt, elektrische Kontaktleiter - wie beispielsweise Kabel - im Reibbelag anzuordnen. Die Halterung des Kontaktleiters erfolgt dabei etwa in einem radial äußeren Bereich des Bremsbackens an der Trägerplatte. Dieser Bereich ist häufig reibbelagfrei. Der Reibbelag weist also dafür eine Aussparung auf. Bei Erreichen der Verschleißgrenze, also dann, wenn der Reibbelag entsprechend abgerieben ist, kommt der Kontaktleiter beim Bremsen mit der Bremsscheibe in Kontakt und wird mit angeschliffen. Dadurch wird ein elektrischer Impuls an einen Signalgeber gegeben, und es erfolgt ein Warnhinweis dahingehend, daß die zulässige Restbelagstärke erreicht ist. In diesem Falle muß ein Belagwechsel vorgenommen werden.

Es sind verschiedene Arten bekannt, wie der elektrische Kontaktleiter in einem Gehäuse angeordnet wird und wie das Gehäuse selbst ausgeführt ist, um beispielsweise an der Trägerplatte befestigt zu werden. Die Halterung soll möglichst dauerhaft stabil sein, damit die Positionierung des elektrischen Leiters verläßlich und konstant ist. Jede Positionsveränderung ist unerwünscht, weil sie Einfluß auf die Anzeige hat. Sie kann nämlich beispielsweise dazu führen, daß der obige Warnhinweis zu früh oder zu spät gegeben wird. Die Anzeigevorrichtung ist betriebsbedingt extremen Temperaturen ausgesetzt. Die dafür verwendeten Werkstoffe (beispielsweise Kunststoff) müssen daher hochwertig sein.

Es sind Anzeigevorrichtungen bekannt, bei denen die Trägerplatte im radial äußeren Bereich mit einer glatten oder einer abgestuften Ausnehmung in Form eines Schlitzes versehen ist. Das Sensorgehäuse wird in diesem Falle von radial außen in den Schlitz eingedrückt. Diese Art der Positionierung hat aber den Nachteil, daß ein betriebsbedingter Zugang nicht möglich ist, weil Belagniederhaltesysteme, wie beispielsweise an der Trägerplatte gehalterte Niederhaltefedern, im Weg sind.

Aus der EP 692 652 A1 ist eine Abnutzungsanzeige - hier isolierter Körper - bekannt, die axial von der Seite der Bremsscheibe über einen Fortsatz in ein Loch/eine Ausnehmung der Trägerplatte eingepreßt wird. Die Axialsicherung erfolgt durch Aufweitung teils formschlüssig, und es sind mehrere Verfahrensschritte zur Positionierung erforderlich. Die Drehsicherung erfolgt durch axiale Vorspannung. In den isolierten Körper selbst ist nur ein einziger elektrischer Leiter eingebettet (eingegossen), der axial vor der Trägerplatte nach radial auswärts verläuft. Diese Art der Einbettung ist herstellungstechnisch zum einen sehr aufwendig und zum anderen unflexibel. Unterschiedliche Kabellängen nach Kundenanforderung müssen schon beim Vergießen berücksichtigt werden.

Ein weiterer Nachteil ist die Ein-Kabel-Ausführung. Damit können keine modernen Diagnosen durchgeführt werden, wie beispielsweise Anzeige/Speicherung/Abfrage im Fahrzeug betreffend die Funktionstüchtigkeit der Verschleißanzeige bzw. betreffend den Verschleißgrad. Hier wird nur dann ein Signal ausgelöst, wenn das Kabel die Bremsscheibe beim Bremsen berührt und angeschliffen wird.

Die DE 38 20 977 A1 zeigt mehrere Befestigungsvarianten und Sensorausführungen. Nach einer ersten Ausführungsform wird ein mehrteilig aufgebauter Sensor mit einer offenen Kontaktschleifenführung von der belagfreien hinteren Seite der Trägerplatte eingeführt und dort befestigt. Nach einer anderen Ausführungsform wird er von radial außen eingesetzt. Damit erstreckt sich nach der ersten Ausführungsform ein Teil der Halterung und das Kabel selbst in einen Bereich, in dem entweder Zuspanneinrichtungen oder Bremssattelschenkel gegen die Trägerplatte drücken. Dies schränkt einerseits die Anwendung in modernen Scheibenbremsen für Nutzfahrzeuge ein, andererseits ist bei eingebauten Bremsbelägen eine Sensornachrüstung nicht möglich, weil es keinen Zugang gibt.

Bei der Ausführungsform mit Radialeinbau muß die Trägerplatte mit mehreren Abstufungen versehen sein, damit überhaupt eine Halterung möglich ist und damit die U-förmige Kontaktschleife so weit in den Bereich der Trägerplatte rückversetzt werden kann, daß der zur Bremsscheibe weisende Kabelbereich eine vertretbare Reibbelagsstärke anzeigen kann. Abgestufte Trägerplatten erfordern aber eine aufwendige Herstellung. Die Abstufungen sind auch dann erforderlich, wenn die beiden Schenkel der U-förmigen Kontaktschleife direkt hintereinander liegen und somit quer bzw. senkrecht auf die Bremsscheibenebene ausgerichtet sind. Diese Art des Kabelverlaufs benötigt zur Positionierung entsprechenden Einbauraum, der sich nachteilig auf eine wirtschaftliche Ausnutzung des Reibbelages auswirkt.

Ausweislich des Oberbegriffs von Anspruch 1 geht die Erfindung von der Lehre der DE-A-42 39 179 aus.

Die elektrisch leitende Einrichtung ist länglich und ein ihrem in eingebautem Zustand der Bremsscheibe am nächsten liegenden Abschnitt benachbarter Abschnitt bildet mit der Bremsscheibenebene einen Winkel α, der zwischen 2° und 20° liegt, bevorzugt zwischen 8° und 16°.

Mit anderen Worten wird im Falle einer U-förmigen Kontaktschleife vermieden, daß die beiden Schenkel in Axialrichtung der Bremse gesehen direkt hintereinander liegen, wodurch sie großen axialen Bauraum in Anspruch nehmen. Vielmehr wird beispielsweise dadurch, daß der oben erwähnte benachbarte Abschnitt mit der Bremsscheibenebene einen Winkel α zwischen 2° und 20° bildet, der axiale Bauraum verringert, weil beispielsweise die beiden Schenkel einer U-förmigen Kontaktschleife versetzt zueinander liegen. Sie können dadurch in Axialrichtung gesehen wesentlich näher aneinander angeordnet werden, wodurch der Axialbauraum verringert ist.

An dieser Stelle sei ausdrücklich darauf hingewiesen, daß der Winkel α "zwischen" 0° und 90° liegt, weshalb die beiden Randwerte 0° und 90° ausgeschlossen sind. Bei 90° würden nämlich im Falle der U-förmigen Kontaktschleife die beiden Schenkel der Kontaktschleife axial hintereinander liegen, wie dies nach der DE 38 20 977 A1 der Fall ist. Bei 0° lägen die beiden Schenkel im Falle einer U-förmigen Kontaktschleife in einer parallel zur Bremsscheibenebene liegenden Ebene nebeneinander, weshalb sie nach Erreichen der Verschleißgrenze gemeinsam an- bzw. abgeschliffen werden. In einem solchen Falle kann es passieren, daß beide Kabelschenkel gleichzeitig den Haltekontakt verlieren und entweder durch die Bremsscheibe zerstört werden oder gar nicht erst mit der Bremsscheibe in Kontakt geraten. Damit würde eine Fehlinformation erfolgen, und eine Diagnose auf Funktionalität wäre unmöglich.

Im Falle der U-förmigen Kontaktschleife sind die beiden Schenkel nicht nur seitlich beabstandet, sie sind auch axial zueinander versetzt. Daher wird einer der beiden Schenkel weniger abgeschliffen als der andere, weshalb er immer noch sicher gehalten werden kann. Dadurch wird eine Dauerpositionierung sichergestellt, wodurch die Signalsicherheit wesentlich verbessert ist. Es wird ein gleichzeitiges An- und Durchschleifen vermieden, woraus ein verbesserter Halt des "Restkabels" am Anzeigepunkt resultiert.

Ein Vorteil gegenüber direkt hintereinander liegenden Kabelschenkeln im Falle der U-förmigen Kontaktschleife liegt darin, daß trotz der erforderlichen Kabelquerschnitte die beiden U-Schenkel wegen des Versatzes und unter Beibehaltung der Kontaktsicherheit in Axialrichtung gesehen relativ eng beieinander liegen können, wodurch erst eine Anzeige einer effektiven bzw. wirtschaftlichen Restbelagstärke möglich ist. Erst damit kann eine Restbelagstärke signalisiert werden, die den heutigen Anforderungen an eine maximale Belagausnutzung entspricht. Dies insbesondere bei Anwendung im Nutzfahrzeugbereich, wo bei großflächigen Bremsbelägen mit entsprechender Belagstärke eine Restbelagstärke von ca. 2 mm angefordert wird.

Erfindungsgemäß ist vorgesehen, daß die elektrisch leitende Einrichtung im Betrieb Strom führt und bei nicht betätigter Bremse potentialmäßig von der Bremsscheibe getrennt ist und der Stromfluß ansprechend auf das Erreichen einer hinter der ersten Verschleißgrenze liegenden zweiten Verschleißgrenze unterbrochen wird.

Auch kann vorgesehen sein, einen Prüfstrom durch die elektrisch leitende Einrichtung zu leiten, um deren Funktionstüchtigkeit zu prüfen.

Insbesondere im Falle einer U-förmigen Kontaktschleife kommt in diesem Falle der der Bremsscheibe näher liegende Kabelschenkel zuerst mit der Bremsscheibe in Kontakt. Wird er angeschliffen, so wird er auf das elektrische Potential der Bremsscheibe gezogen (z.B. Masseschluß). Daraufhin wird beispielsweise ein (unterbrochenes) Warnsignal erzeugt. Der der Bremsscheibe näher liegende Kabelschenkel dient dazu, das Erreichen einer ersten Verschleißgrenze zu signalisieren. Diese erste Verschleißgrenze kann so gelegt werden, daß bei ihrem Erreichen die zulässige Restbelagdicke annähernd erreicht ist. Wird infolge weiteren Abschleifens der der Bremsscheibe näher liegende Kabelschenkel zerstört, so wird der Stromfluß durch die Kabelschleife unterbrochen. Diese Unterbrechung des Stromflusses kann dazu genutzt werden, ein weiteres, beispielsweise dauernd erzeugtes Warnsignal zu generieren. Die damit erreichte zweite Verschleißgrenze kann mit dem maximal zulässigen Verschleiß (minimale Reibbelagdicke) gleich sein.

Weiter bevorzugt ist erfindungsgemäß vorgesehen, daß der der Bremsscheibe am nächsten liegende Abschnitt der elektrisch leitenden Einrichtung ab Erreichen der ersten Verschleißgrenze beim Bremsen an der Bremsscheibe anliegt, so daß er in dem Intervall zwischen der ersten Verschleißgrenze und der zweiten Verschleißgrenze zerstört wird.

Insbesondere diese Ausgestaltung erlaubt die oben im einzelnen erläuterten Funktionen.

Nach der Erfindung ist eine Öffnung in einer Trägerplatte des Bremsbacken vorgesehen, die mit einer Öffnung in dem Reibbelag fluchtet, wobei die beiden Öffnungen zum zumindest teilweisen Aufnehmen eines Halters für die elektrisch leitende Einrichtung dienen.

Dadurch ist ein besonders einfacher Aufbau der erfindungsgemäßen Anzeigevorrichtung möglich.

Erfindungsgemäß weiter bevorzugt ist die Öffnung in dem Reibbelag nach radial außen hin offen. Mit anderen Worten weist der Reibbelag eine Aussparung auf.

Die Öffnung (Aussparung) in dem Reibbelag hat erfindungsgemäß weiter bevorzugt die Form einer Rinne, insbesondere einer sich zur Trägerplatte hin verjüngenden Rinne.

Diese Ausgestaltung erleichtert das gezielte axiale Einschieben des Halters von der Reibbelagseite her, beispielsweise bis zum Anschlag an der Trägerplatte. Dies dient der Erleichterung und Verbesserung der Positionierung.

Ist die Rinne verjüngend ausgestaltet, sind das Anbringen des Halters und die Positionierung der elektrisch leitenden Einrichtung verbessert, weil eine relative Formschlüssigkeit erzeugt wird.

Erfindungsgemäß weiter bevorzugt dient die Öffnung in der Trägerplatte zum Halten des Halters. Dadurch ist eine besonders einfache Konstruktion realisiert.

Weiter bevorzugt ist eine auf das Einsetzen des Halters in die Öffnung der Trägerplatte ansprechende selbsttätige Verrastung des Halters vorgesehen.

Eine solche Axialsicherung des Halters kann direkt oder indirekt ausgestaltet sein. Bei einer indirekten Ausgestaltung ist zwischen einem Ansatzbund und einer Halterrückseite beispielsweise ein Klemmblech angeordnet, das mehrere um den Umfang verteilte Federzungen aufweist, die abwechselnd und entgegengerichtet nach innen und außen gebogen sind. Damit läßt sich der Halter in Montagerichtung gleitend in die Öffnung einstecken, wohingegen in Auszugsrichtung die Federzungen sperren. Die Herstellung eines solchen Klemmblechs aus einem gerollten Band aus einem nicht rostenden Federstahl oder dergleichen ist relativ einfach.

Im Sinne einer direkten Halterung kann auch vorgesehen sein, Federzungen in den eigentlichen Halter einzubetten.

In beiden Fällen liegt eine kraft- bzw. formschlüssige Halterung vor.

Demgegenüber kann auch eine stoffschlüssige Halterung vorgesehen sein, beispielsweise mittels Klebens, wobei bevorzugt ein hoch temperaturbeständiger Kleber verwendet wird.

Weiter bevorzugt ist die erfindungsgemäße Vorrichtung gekennzeichnet durch eine auf Formschluß beruhende Einrichtung zum Sichern des Halters gegen ein Verdrehen bezüglich der Öffnung(en) in der Trägerplatte und/oder dem Reibbelag. Zu diesem Zwecke kann es beispielsweise vorgesehen sein, daß der Halter mit wenigstens einer seiner Außenflächen in montiertem Zustand an wenigstens einer Innenwand der Aussparung in dem Reibbelag anliegt. Diese Lösung ist wiederum besonders einfach.

Nach einer weiter bevorzugten Ausführungsform der Erfindung ist vorgesehen, daß der Halter einen ersten Haltekanal für den in eingebautem Zustand der Bremsscheibe am nächsten liegenden Abschnitt der elektrisch leitenden Einrichtung, einen zweiten Haltekanal für einen weiter von der Bremsscheibe weg liegenden Abschnitt der elektrisch leitenden Einrichtung und einen Verbindungskanal für einen Verbindungsabschnitt der elektrisch leitenden Einrichtung aufweist.

Mit anderen Worten wird nach dieser Ausgestaltung die Anzeigevorrichtung beispielsweise in Form der oben bereits erwähnten U-förmigen Kontaktschleife ausgebildet.

Insbesondere bei dieser Ausgestaltung ist der Halter von der Grundform im Querschnitt L-förmig ausgelegt. Einer seiner Schenkel dient dabei als axialer Ansatz zur Halterung in der Öffnung der Trägerplatte. Der der Bremsscheibe näher liegende Bereich des Halters nimmt die Kontaktschleife auf.

Erfindungsgemäß weiter bevorzugt hat/haben der Verbindungskanal, der erste Haltekanal und/oder der zweite Haltekanal die Form einer offenen Rinne.

Wie bereits oben erwähnt, hängt häufig die Länge der elektrischen Einrichtung vom Einsatzfall ab. Bei geschlossenen Kanälen, in denen die elektrische Einrichtung eingebettet, insbesondere eingegossen/eingepreßt ist, besteht insofern wenig Flexibilität, weshalb eine aufwendige Lagerhaltung erforderlich ist.

Ist/sind aber der Verbindungskanal und/oder der zweite Haltekanal in Form einer offenen Rinne ausgebildet, kann das beispielsweise thermoisolierte Kabel mit kundenspezifischer Länge in den Haltekanal eingeführt werden, um die Vorrichtung fertigzustellen.

Nach einer weiter bevorzugten Ausführungsform der Erfindung ist vorgesehen, daß die Tiefe der Rinne gleich der oder größer als die Dicke des davon gehaltenen Abschnitts der elektrisch leitenden Einrichtung ist.

Bei dieser Ausgestaltung ist die Gefahr von Beschädigungen trotz der Offenheit der Rinne gering, weil die elektrische Einrichtung in der Rinne "versinkt" und dadurch geschützt ist.

Im übrigen kann die Ausgestaltung auch derart gewählt sein, daß die offene Seite der Rinne an einer Fläche der Aussparung anliegt, wodurch die ursprünglich offene Rinne verschlossen wird.

Insbesondere die Ausführung des zweiten Haltekanals in Form einer offenen Rinne, bevorzugt seitlich offen, vereinfacht die Montage. Über geeignete sich verjüngende oder zueinander versetzte Querschnittskonturen - in Abhängigkeit von der Kabeldimension - kann das Kabel darin positions- und funktionssicher verbracht und verklemmt werden. Damit läßt sich die Kabeleinbringung unter Beibehaltung der Funktionssicherheit verbessern.

Hat auch der erste Haltekanal die Form einer offenen Rinne, können die beiden nach Einlegen in die Haltekanäle aus den Rinnen herausstehenden Abschnitte der elektrisch leitenden Einrichtung zur besseren Halterung miteinander verdrillt werden.

Die elektrisch leitende Einrichtung hat in eingebautem Zustand einen geringeren Abstand von der Bremsscheibe als eine Trägerplatte des Bremsbacken.

Mit anderen Worten liegt die elektrisch leitende Einrichtung nicht innerhalb der Trägerplatte, was erhebliche Vorteile hinsichtlich des Gesamtaufbaus hat. Insbesondere wird dadurch Unabhängigkeit davon erreicht, ob ein Bremsbelagniederhaltesystem (in welcher Ausführung auch immer) vorhanden ist oder nicht, und ob die elektrische Einrichtung darüber oder darunter verlegt wird. Die elektrische Einrichtung verläuft darüber hinaus auch nicht im Kontaktbereich eines eventuellen Zuspannsystems bzw. eines Schenkels des Bremssattels. Somit ist es auch möglich, die Verschleißanzeigeeinrichtung entweder in eine Bremse mit bereits eingebautem Bremsbacken nachzurüsten oder eine eventuell defekte Anzeigevorrichtung auszutauschen.

Die Erfindung ist unabhängig davon anwendbar, ob die elektrische Einrichtung ummantelt ist oder nicht. Bevorzugt ist sie von einer hitzebeständigen Ummantelung umgeben. Auch der Halter ist bevorzugt aus einem hitzebeständigen Werkstoff hergestellt. Als Material kommt insbesondere ein Kunststoff wie etwa ein Polyimid in Betracht. Denkbar ist aber auch ein Duroplast.

Wenngleich der Erfindungsgedanke oben anhand zueinander beabstandeter und gegeneinander versetzter Kabelführungen mit axialer Befestigung beschrieben worden ist, ist er auch im Falle von Radialeinbauten/-befestigungen entsprechend dem oben erläuterten Stand der Technik anwendbar. Auch dabei sind die erfindungsgemäßen Vorteile erzielbar. Denn auch in einem solchen Falle wird die Funktionssicherheit erhöht und die Vielseitigkeit verbessert.

Es wird ausdrücklich darauf hingewiesen, daß die Erfindung insbesondere im Bereich der Nutzfahrzeuge Anwendung findet.

Im folgenden ist die Erfindung anhand eines bevorzugten Ausführungsbeispiels unter Bezugnahme auf die beiliegende Zeichnung mit weiteren Einzelheiten näher erläutert. Dabei zeigen
- Figur 1: eine schematische Draufsicht auf einen Bremsbacken mit einer Verschleißanzeigevorrichtung nach einem Ausführungsbeispiel der Erfindung,
- Figur 2: eine schematische Schnittansicht entlang der Linie II-II in Figur 1,

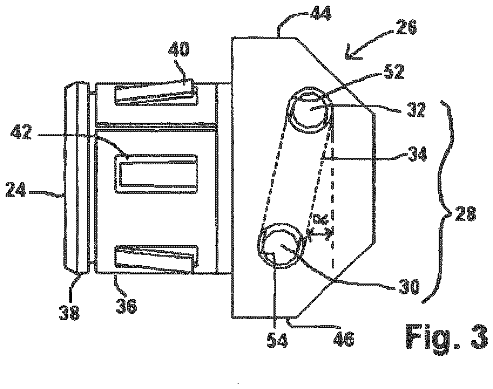

- die Figuren 3 bis 7: Ansichten eines Halters für die Verschleißanzeigevorrichtung nach Figur 1,

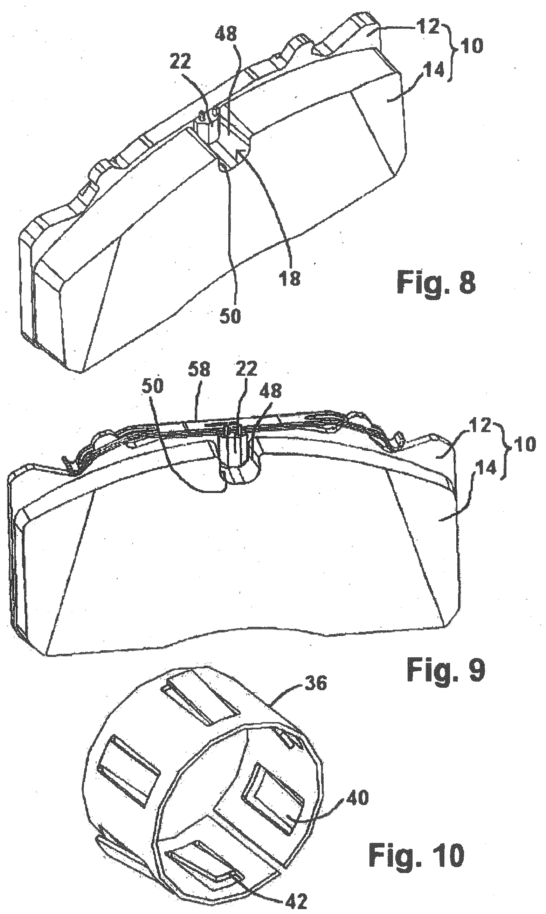

- Figur 8: eine schematische perspektivische Ansicht des Bremsbacken mit Verschleißanzeigevorrichtung nach Figur 1,
- Figur 9: die gleiche Ansicht wie Figur 8, jedoch aus einer etwas anderen Perspektive und mit einer Niederhaltefeder, und
- Figur 10: eine schematische perspektivische Ansicht eines Klemmblechs mit Federzungen für die Verschleißanzeigevorrichtung nach Figur 1.

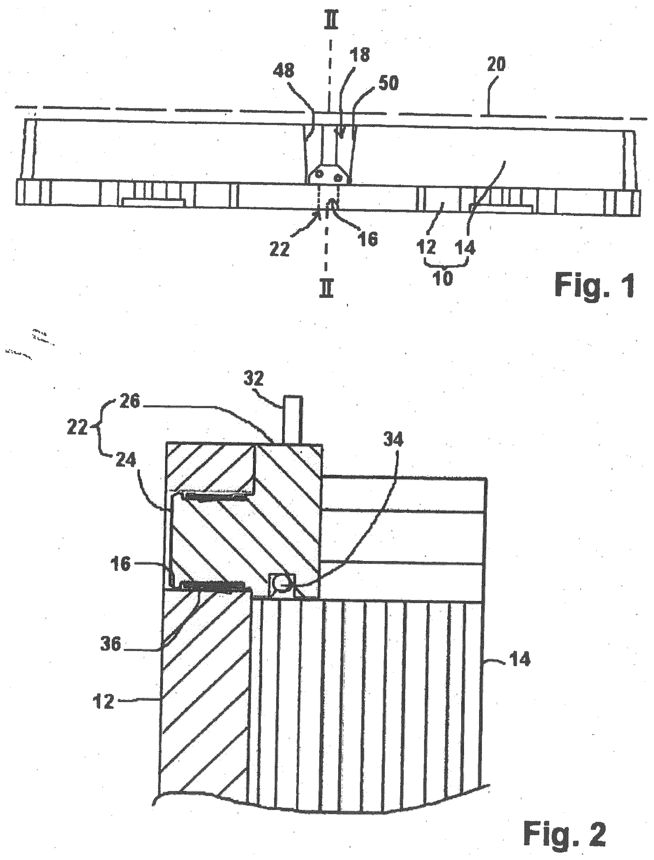

Die Zeichnung zeigt einen Bremsbacken 10, der eine Trägerplatte 12 und einen Reibbelag 14 aufweist. Die Trägerplatte 12 hat eine Öffnung 16. Der Reibbelag 14 hat eine rinnenförmige Aussparung 18, die mit der Öffnung 16 fluchtet. Wie insbesondere der Figur 1 zu entnehmen ist, verjüngt sich die Aussparung 18 zu der Öffnung 16 hin.

Figur 1 zeigt auch eine Bremsscheibenebene, die mit der Bezugszahl 20 bezeichnet ist.

Gemäß Figur 2 dienen die Öffnung 16 und die Aussparung 18 dazu, einen Halter 22 einer Verschleißanzeigeeinrichtung aufzunehmen. Gemäß Figur 2 ist der Halter 22 in der Schnittansicht L-förmig, wobei ein Ansatz 24 des Halters 22 in die Öffnung 16 eingesteckt wird, wohingegen sich ein Kopf 26 des Halters 22 in der Aussparung 18 befindet. In dem Kopf 26 des Halters 22 liegt eine im wesentlichen U-förmige Schleife aus einem elektrisch leitenden Kabel, das insgesamt mit der Bezugszahl 28 bezeichnet ist. Das "U" hat zwei Schenkel 30 und 32, die über einen bogenförmigen Verbindungsabschnitt 34 miteinander verbunden sind. Die Kabelschleife 28 hat eine hitzebeständige Ummantelung aus einem Kunststoff, beispielsweise Polyimid. Denkbar ist aber auch ein Duroplast. Auch der Halter 22 ist aus einem hitzebeständigen Werkstoff.

Zur Axialsicherung des Halters 22 in der Öffnung 16 dient ein Klemmblech 36 in Form eines geschlitzten Rings, das mittels eines Radialbundes 38 auf dem Halter 22 positioniert ist. Das Klemmblech weist Federzungen auf, von denen zwei beispielhaft mit den Bezugszahlen 40 bzw. 42 bezeichnet sind. Die Federzunge 40 steht nach radial außen vor, die Federzunge 42 nach radial innen. Sie verrasten ansprechend auf das Einschieben des Halteransatzes 24 in die Öffnung 16 mit einer entsprechenden Stufe in der Innenwand der Öffnung 16 bzw. an der Außenwand des Ansatzes 24. Dadurch ist der Halter 22 nach dem Einschieben in die Öffnung 16 in Axialrichtung gesichert.

Zur Sicherung gegen ein Verdrehen innerhalb der Öffnung 16 dienen Abflachungen 44 und 46 an dem Halterkopf 26, die in eingebautem Zustand bei einem Verdrehen an den Innenseiten 48 bzw. 50 der Aussparung 18 anschlagen.

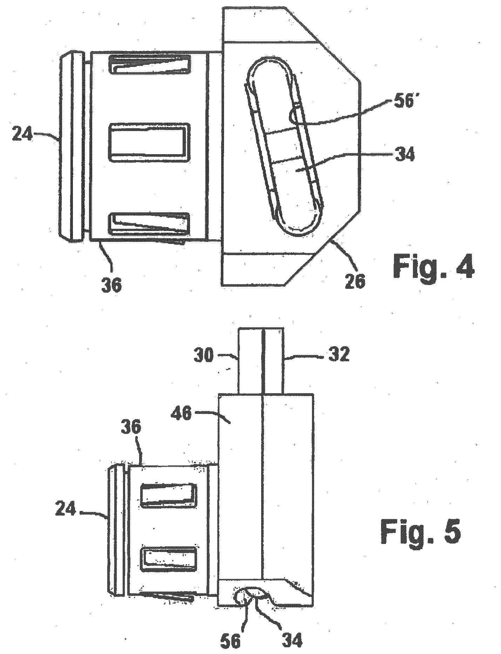

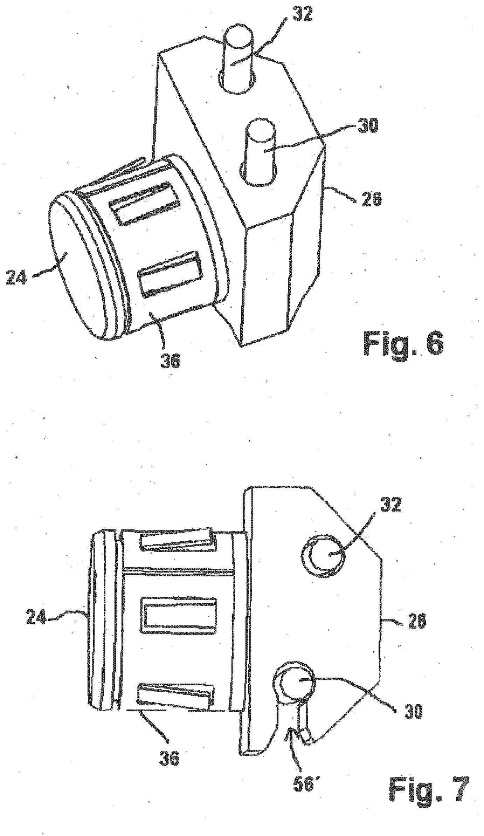

Der Halter 22 bzw. sein Kopf 26 weist zwei Haltekanäle 52 und 54 zum Aufnehmen der beiden Schenkel 32 bzw. 30 sowie einen Verbindungskanal 56 zum Aufnehmen des Verbindungsabschnitts 34 auf. Wie insbesondere den Figuren 4, 5 und 7 zu entnehmen ist, sind die Kanäle 54 (nur bei der Ausführungsform nach Figur 7) und 56 als offene Rinnen ausgestaltet, was das Einsetzen des Kabels 28 in den Halter 22 stark vereinfacht. Auch der Haltekanal 52 kann als offene Rinne ausgeführt sein. Die Tiefe der Rinnen 54 und 56 und gegebenenfalls der Rinne 52 ist jeweils größer als die Dicke des Kabels 28, wodurch das Kabel 28 in den beiden Rinnen sicher gehalten ist. Unter Umständen genügt es auch, daß die Rinnentiefe der Kabeldicke gleich ist. Wie darüber hinaus insbesondere Figur 7 zu entnehmen ist, ist derjenige Bereich, in dem der Schenkel 30 des Kabels 28 gehalten ist, weiter als ein Eingangsbereich der Rinne, was zu einem noch einmal verbesserten Halten des Schenkels 30 in dem Halter 22 bzw. seinem Kopf 26 führt. Das gleiche gilt für die Rinne 56 und gegebenenfalls die Rinne 52.

Die aus den Haltekanälen/Rinnen 52 und 54 herausragenden Abschnitte 30, 32 des Kabels können zur weiteren Verbesserung der Halterung miteinander verdrillt werden.

Bei dem in der Zeichnung dargestellten Ausführungsbeispiel wird der Halter 22 mit seinem Ansatz 24 axial von der Belagseite her in Axialrichtung der Bremse in die Öffnung 16 eingeschoben. Dies ist auch bei montierter Niederhaltefeder 58 möglich.

Die Erfindung ist aber nicht auf diese Ausführungsform beschränkt. Vielmehr deckt sie auch Ausführungen ab, bei denen der Halter nicht axial, sondern vielmehr radial eingesetzt wird.

Der Verbindungsabschnitt 34 schließt mit der Bremsscheibenebene 20 einen Winkel α ein, der bei dem in der Zeichnung dargestellten Ausführungsbeispiel etwa 12° beträgt, weil der Schenkel 30 des Kabels 28 zum einen neben dem Schenkel 32 liegt, zum anderen aber von der Bremsscheibenebene 20 weiter entfernt ist als der Schenkel 32.

Die Kabelschleife 28 liegt im Betrieb elektrisch auf einem anderen Potential als die Bremsscheibe und ist von einem Strom durchflossen. Ist der Reibbelag stark abgenutzt, gelangt beim Bremsen der Schenkel 32 der Kabelschleife 28 an die Bremsscheibe und wird elektrisch auf deren Potential gezogen. Diese Potentialänderung wird detektiert, und es wird ein erstes, beispielsweise blinkendes Warnsignal erzeugt. Da der Verbindungsabschnitt 34 mit der Bremsscheibenebene 20 den Winkel α einschließt, wird auch bei weiterem Abschleifen des Reibbelages 14 und damit der Kontaktschleife 28 der Schenkel 30 über längere Betriebsdauer nicht in Mitleidenschaft gezogen werden. Er wird vielmehr verläßlich in dem Kanal 54 gehalten.

Das weitere Abschleifen führt aber irgendwann dazu, daß der Schenkel 32 zerstört und/oder von dem Verbindungsabschnitt 34 getrennt wird. Dadurch wird der Stromfluß durch die Kabelschleife 28 unterbrochen. Diese Unterbrechung wird ebenfalls detektiert, und es wird ein nun nicht mehr blinkendes, sondern vielmehr dauerhaftes Warnsignal erzeugt. Während das erste Warnsignal nur eine Vorwarnung dahingehend war, daß der Bremsbacken in naher Zukunft ausgetauscht werden muß, dient das dauernde Warnsignal dazu, das Erreichen der maximal zulässigen Verschleißgrenze anzuzeigen, damit der Bremsbacken unverzüglich ausgetauscht wird.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Scheibenbremse mit einem Bremsbacken (10) und einer Vorrichtung zum Anzeigen des Verschleißes des Reibbelages (14) des Bremsbackens (10), wobei die Anzeigevorrichtung eine elektrisch leitende Einrichtung (28) aufweist, die bei Erreichen einer ersten vorgegebenen Verschleißgrenze beim Bremsen mit der Bremsscheibe elektrisch in Kontakt kommt, wobei
die elektrisch leitende Einrichtung länglich und eine U-förmige Kontaktschleife (28) ist, die beiden Schenkel des "U" seitlich beabstandet und axial zueinander versetzt sind und einer der beiden Schenkel der in eingebautem Zustand der Bremsscheibe am nächsten liegende Abschnitt (32) der elektrisch leitenden Einrichtung ist, und
ein dem im eingebauten Zustand der Bremsscheibe am nächsten liegenden Abschnitt (32) benachbarter Abschnitt (34) der elektrisch leitenden Einrichtung mit der Bremsscheibenebene (20) einen Winkel (α) bildet, der zwischen 2° und 20° liegt, bevorzugt zwischen 8° und 16°,
die elektrisch leitende Einrichtung (28) im Betrieb Strom führt und bei nicht betätigter Bremse potentialmäßig von der Bremsscheibe getrennt ist,
der Stromfluß ansprechend auf das Erreichen einer hinter der ersten Verschleißgrenze liegenden zweiten Verschleißgrenze unterbrochen wird und
eine Trägerplatte (12) des Bremsbacken (10) eine Öffnung (16) aufweist, die mit einer Öffnung (18) in dem Reibbelag (14) fluchtet, wobei die beiden Öffnungen zum zumindest teilweisen Aufnehmen eines Halters (22) für die elektrisch leitende Einrichtung (28) dienen.

2. Scheibenbremse nach Anspruch 1, **dadurch gekennzeichnet, daß** der der Bremsscheibe am nächsten liegende Abschnitt (32) der elektrisch leitenden Einrichtung (28) ab Erreichen der ersten Verschleißgrenze beim Bremsen an der Bremsscheibe anliegt, so daß er in dem Intervall zwischen der ersten Verschleißgrenze und der zweiten Verschleißgrenze zerstört wird.

3. Scheibenbremse nach einem der vorangehenden Ansprüche, **dadurch gekennzeichnet, daß** die Öffnung (18) in dem Reibbelag (14) nach radial außen hin offen ist.

4. Scheibenbremse nach einem der vorangehenden Ansprüche, **dadurch gekennzeichnet, daß** die Öffnung (18) in dem Reibbelag (14) die Form einer Rinne hat, insbesondere einer sich zur Trägerplatte (12) hin verjüngenden Rinne.

5. Scheibenbremse nach einem der vorangehenden Ansprüche, **dadurch gekennzeichnet, daß** die Öffnung (16) in der Trägerplatte (12) zum Halten des Halters (22) dient.

6. Scheibenbremse nach einem der vorangehenden Ansprüche, **gekennzeichnet durch** eine auf das Einsetzen des Halters (22) in die Öffnung (16) der Trägerplatte (12) ansprechende selbsttätige Verrastung des Halters.

7. Scheibenbremse nach einem der vorangehenden Ansprüche, **gekennzeichnet durch** eine auf Formschluß beruhende Einrichtung (44, 46; 58, 50) zum Sichern des Halters (22) gegen ein Verdrehen bezüglich der Öffnung(en) (16, 18) in der Trägerplatte (12) und/oder dem Reibbelag (14).

8. Scheibenbremse nach einem der vorangehenden Ansprüche, **dadurch gekennzeichnet, daß** der Halter (22)
einen ersten Haltekanal (52) für den in eingebautem Zustand der Bremsscheibe am nächsten liegenden Abschnitt (32) der elektrisch leitenden Einrichtung (28),
einen zweiten Haltekanal (54) für einen weiter von der Bremsscheibe weg liegenden Abschnitt (30) der elektrisch leitenden Einrichtung und
einen Verbindungskanal (56) für einen Verbindungsabschnitt (34) der elektrisch leitenden Einrichtung aufweist.

9. Scheibenbremse nach Anspruch 8, **dadurch gekennzeichnet, daß** der Verbindungskanal (56), der erste Haltekanal (52) und/oder der zweite Haltekanal (54) die Form einer offenen Rinne hat/haben.

10. Scheibenbremse nach Anspruch 9, **dadurch gekennzeichnet, daß** die Tiefe der Rinne (54, 56) gleich oder größer als die Dicke des davon gehaltenen Abschnitts (30, 34) der elektrisch leitenden Einrichtung (28) ist.

11. Scheibenbremse nach einem der vorangehenden Ansprüche, **dadurch gekennzeichnet, daß** die elektrisch leitende Einrichtung (28) in eingebautem Zustand einen geringeren Abstand von der Bremsscheibe hat als eine Trägerplatte (12) des Bremsbacken (10).

## Claims

1. Disc brake having a brake shoe (10) and an apparatus for indicating the wear of the friction lining (14) of the brake shoe (10), wherein the indication apparatus has an electrically conducting device (28) which comes into contact electrically with the brake disc during braking when a first predefined wear limit is reached,
the electrically conducting device being elongate and a U-shaped contact loop (28), the two limbs of the "U" being laterally spaced apart and axially offset with respect to one another and one of the two limbs being the section (32) of the electrically conducting device closest to the brake disc in the installed state, and
a section (34) of the electrically conducting device which adjoins the closest section (32) to the brake disc in the installed state forming an angle (α) with the brake disc plane (20), which angle (α) lies between 2° and 20°, preferably between 8° and 16°,
the electrically conducting device (28) conducting current during operation and being disconnected in terms of potential from the brake disc when the brake is not actuated,
the current flow being interrupted in response to a second wear limit which lies after the first wear limit being reached and
a carrier plate (12) of the brake shoe (10) having an opening (16), which opening (16) is flush with an opening (18) in the friction lining (14), the two openings serving to at least partially receive a holder (22) for the electrically conducting device (28).

2. Disc brake according to Claim 1, **characterized in that** that section (32) of the electrically conducting device (28) which lies closest to the brake disc bears against the brake disc during braking when the first wear limit is reached, with the result that it is destroyed in the interval between the first wear limit and the second wear limit.

3. Disc brake according to either of the preceding claims, **characterized in that** the opening (18) in the friction lining (14) is open radially to the outside.

4. Disc brake according to one of the preceding claims, **characterized in that** the opening (18) in the friction lining (14) has the shape of a groove, in particular of a groove which tapers towards the carrier plate (12).

5. Disc brake according to one of the preceding claims, **characterized in that** the opening (16) in the carrier plate (12) serves to hold the holder (22).

6. Disc brake according to one of the preceding claims, **characterized by** an automatic latching means of the holder, which latching means responds to the insertion of the holder (22) into the opening (16) of the carrier plate (12).

7. Disc brake according to one of the preceding claims, **characterized by** a device (44, 46; 58, 50) which is based on a positively locking connection for securing the holder (22) against rotation with regard to the opening/openings (16, 18) in the carrier plate (12) and/or the friction lining (14).

8. Disc brake according to one of the preceding claims, **characterized in that** the holder (22)
has a first holding channel (52) for that section (32) of the electrically conducting device (28) which lies closest to the brake disc in the installed state,
a second holding channel (54) for a section (30) of the electrically conducting device, which section lies further away from the brake disc, and
a connecting channel (56) for a connecting section (34) of the electrically conducting device.

9. Disc brake according to Claim 8, **characterized in that** the connecting channel (56), the first holding channel (52) and/or the second holding channel (54) has/have the shape of an open groove.

10. Disc brake according to Claim 9, **characterized in that** the depth of the groove (54, 56) is greater than or equal to the thickness of that section (30, 34) of the electrically conducting device (28) which is held by it.

11. Disc brake according to one of the preceding claims, **characterized in that**, in the installed state, the electrically conducting device (28) is at a smaller spacing from the brake disc than a carrier plate (12) of the brake shoe (10).

## Revendications

1. Frein à disque comprenant une mâchoire de frein (10) et un dispositif pour indiquer l'usure de la garniture de frein (14) de la mâchoire de frein (10), le dispositif d'indication comprenant un système électriquement conducteur (28) qui, lorsqu'une première limite d'usure prédéfinie est atteinte, vient en contact électriquement lors du freinage avec le disque de frein,
le système électriquement conducteur étant allongé et étant une boucle de contact en forme de U (28), les deux branches du "U" étant espacées latéralement et étant décalées axialement l'une par rapport à l'autre et l'une des deux branches étant la portion (32) du système électriquement conducteur la plus proche dans l'état installé du disque de frein, et
une portion (34) du système électriquement conducteur adjacente à la portion (32) la plus proche dans l'état installé du disque de frein formant avec le plan du disque de frein (20) un angle (α) compris entre 2° et 20°, de préférence entre 8° et 16°,
le système électriquement conducteur (28) conduisant le courant pendant le fonctionnement et étant séparé du disque de frein en termes de potentiel lorsque le frein n'est pas activé,
le flux de courant, en réponse à l'atteinte d'une deuxième limite d'usure située derrière la première limite d'usure, étant interrompu et
une plaque de support (12) de la mâchoire de frein (10) comprenant une ouverture (16) qui est en affleurement avec une ouverture (18) dans la garniture de frein (14), les deux ouvertures servant à recevoir au moins en partie un élément de retenue (22) pour le système électriquement conducteur (28).

2. Frein à disque selon la revendication 1, **caractérisé en ce que** la portion (32) du système électriquement conducteur (28) la plus proche du disque de frein s'applique contre le disque de frein lors du freinage une fois que la première limite d'usure est atteinte de sorte qu'elle soit détruite dans l'intervalle entre la première limite d'usure et la deuxième limite d'usure.

3. Frein à disque selon l'une quelconque des revendications précédentes, **caractérisé en ce que** l'ouverture (18) dans la garniture de frein (14) est ouverte radialement vers l'extérieur.

4. Frein à disque selon l'une quelconque des revendications précédentes, **caractérisé en ce que** l'ouverture (18) dans la garniture de frein (14) présente la forme d'une rigole, en particulier d'une rigole se rétrécissant en direction de la plaque de support (12).

5. Frein à disque selon l'une quelconque des revendications précédentes, **caractérisé en ce que** l'ouverture (16) dans la plaque de support (12) sert à retenir l'élément de retenue (22).

6. Frein à disque selon l'une quelconque des revendications précédentes, **caractérisé par** un encliquetage automatique de l'élément de retenue en réponse à l'insertion de l'élément de retenue (22) dans l'ouverture (16) de la plaque de support (12) .

7. Frein à disque selon l'une quelconque des revendications précédentes, **caractérisé par** un système (44, 46 ; 58, 50) basé sur un engagement par correspondance de formes pour fixer l'élément de retenue (22) contre une rotation par rapport aux ouvertures (16, 18) dans la plaque de support (12) et/ou dans la garniture de frein (14).

8. Frein à disque selon l'une quelconque des revendications précédentes, **caractérisé en ce que** l'élément de retenue (22) présente
un premier canal de retenue (52) pour la portion (32) du système électriquement conducteur (28) la plus proche dans l'état installé du disque de frein,
un deuxième canal de retenue (54) pour une portion (30) du système électriquement conducteur plus éloignée du disque de frein et
un canal de liaison (56) pour une portion de liaison (34) du système électriquement conducteur.

9. Frein à disque selon la revendication 8, **caractérisé en ce que** le canal de liaison (56), le premier canal de retenue (52) et/ou le deuxième canal de retenue (54) présentent la forme d'une rigole ouverte.

10. Frein à disque selon la revendication 9, **caractérisé en ce que** la profondeur de la rigole (54, 56) est supérieure ou égale à l'épaisseur de la portion (30, 34) du système électriquement conducteur (28) retenue par celle-ci.

11. Frein selon l'une quelconque des revendications précédentes, **caractérisé en ce que** le système électriquement conducteur (28), dans l'état installé, a une plus faible distance au disque de frein qu'une plaque de support (12) de la mâchoire de frein (10).
